# EUROPEAN PATENT APPLICATION

(11) **EP 1 489 434 A1**
(43) Date of publication of application: **22.12.2004**
(21) Application number: 03715582.7
(22) Date of filing: 28.03.2003
(51) Int. Cl.: G01T 1/20

(54) **X-RAY DETECTOR**

(30) Priority: 28.03.2002 JP 2002091591
(71) Applicant: Kabushiki Kaisha Toshiba, Tokyo 105-8001 (JP)
(72) Inventor: ITO, Kenichi, Yokohama-shi, Kanagawa 230-0074 (JP); AIDA, Hiroshi, Yokohama-shi, Kanagawa 236-0005 (JP); OYAIZU, Eiji, Yokohama-shi, Kanagawa 241-0004 (JP); FUKUTA, Yukihiro, Yokohama-shi, Kanagawa 235-0022 (JP); SAITO, Akihisa, Kamakura-shi, Kanagawa 247-0051 (JP); FUJISAWA, Akiko, Kawasaki-shi, Kanagawa 211-0068 (JP); HOMMA, Katsuhisa, Yokosuka-shi, Kanagawa 239-0835 (JP)
(74) Representative: Garkisch, Marcus
(86) International application number: PCT/JP2003/003952
(87) International publication number: WO 2003/083513

(57) **Abstract**

An X-ray detector comprising scintillation layer (38) separated by a partition (39) for each pixel and a photodiode (13) for converting fluorescent light, which is converted by the scintillation layer (38), into signal charge, wherein when an average particle diameter of phosphor particles forming the scintillation layer (38) is Ds and an average particle diameter of particles forming the partition (39) is Dw, Ds>Dw is satisfied.

## Description

### TECHNICAL FIELD

The present invention relates to an X-ray detector used for detection of X-ray images and a method for producing it.

### BACKGROUND ART

Recently, a flat-type X-ray detector using active matrix is attracting attention as a new-generation X-ray detector for diagnosis. The flat-type X-ray detector is configured to output an X-ray image formed by X-rays or a real-time X-ray fluoroscopic image as a digital signal.

The flat-type X-ray detector is a solid detector, so that it is highly expected in terms of the improvement and stability of image quality performance.

The flat-type X-ray detector for general radiography and chest radiography to collect static images with a relatively large radiation dose has been developed and become commercially available. It is also possible to detect real-time X-ray dynamic images of 30 frames or more per second with a dose for fluoroscopy. Therefore, products applied to the field of diagnosis of circulatory organs and digestive organs are also expected to be commercialized in near future. The commercialization of the X-ray detector for dynamic images requires improvement of S/N ratio and further improvement of a real-time micro-signal processing technology.

The flat-type X-ray detector is roughly categorized into two types of systems, a direct conversion system and an indirect conversion system.

The direct conversion system uses a photoconductive layer of a-Se or the like to directly convert X-rays into electric charge, and the electric charge is stored in a storage capacitor. According to this system, image resolution characteristics are substantially determined with the pixel pitch. The indirect conversion system converts X-rays once into visible light by a scintillation layer, converts the visible light into electric charge by a photoelectric converting element such as an a-Si photodiode or CCD, and stores the electric charge in a storage capacitor.

In order to assure a signal strength by increasing an X-ray absorption coefficient, the flat X-ray detector of the direct conversion system adopts, for example, a photoconductive layer of a-Se having a thickness of about 1 mm. For example, an intense bias electric field of 10 V/µm is applied to both ends of a photoconductive layer of a-Se to increase a photoconduction charge generation rate per X-ray photon, to collect the photoconduction charge to an electrode without being trapped by defects in the layer and to suppress the electric charge diffusion in a direction perpendicular to the bias electric field as much as possible. Therefore, a high voltage of, for example, about 10 kV is applied when the a-Se photoconductive layer has a thickness of 1.0 mm.

The X-ray detector of the direct conversion system has an advantage that its resolution characteristics are outstanding, but its reliability is doubtful because TFT having a low operation voltage must be protected from a high voltage. And, there is also a disadvantage that photoconductive material having a low dark current characteristic, a high sensitivity characteristic, thermal stability and the like cannot be obtained easily.

Meanwhile, the X-ray detector of the indirect conversion system uses a photodiode, a CCD or the like to produce a signal electric charge, so that it is not necessary to apply a high voltage as by the direct conversion system, and there is no problem of dielectric breakdown by a high voltage. There is also an advantage of easy commercialization because the basic technology of the scintillator material and photodiode has been established.

But, it has a disadvantage that its resolution characteristic for X-ray diagnostic systems is generally inferior to the direct conversion system because fluorescent light converted by the scintillation layer causes diffusion or scattering before reaching the photoelectric converting element. Especially, when the scintillation layer is formed thick in order to improve the sensitivity characteristic, the resolution is degraded considerably because the diffusion of fluorescent light becomes large before reaching the photoelectric converting element such as a photodiode. To secure the resolution by suppressing the diffusion of the fluorescent light, there is a known method of forming the scintillation layer in pixel unit along with the matrix of photodiodes and TFT and optically shielding the scintillator pixels from each other by the partition between them. But, the partition of the conventional X-ray detector is formed of metal material or the like and not contributing to the X-ray sensitivity. Therefore, it has a problem that a total light emission amount of the scintillation layer decreases by a portion replaced from the scintillation layer to the partition, and the sensitivity of the X-ray detector deteriorates.

### SUMMARY OF THE INVENTION

Therefore, the present invention provides an X-ray detector of an indirect conversion system having a partition for suppressing degradation in resolution characteristics between pixels, wherein a decrease in luminance because of the existence of the partition is reduced as much as possible.

The present invention also provides a method for producing the X-ray detector, wherein the structure of the partition and the scintillation layer for reducing a decrease in brightness as small as possible is formed with good homogeneity and reliability.

The X-ray detector of the present invention has the configuration described below in order to improve the sensitivity characteristic while maintaining high resolution characteristics of the X-ray detector of the indirect conversion system having a partition formed between pixels.

Specifically, according to one aspect of the present invention, there is provided an X-ray detector comprising a photoelectric converting section of a pixel unit, scintillator pixels containing a fluorescent material I formed on individual pixels of the photoelectric converting section, and a partition containing a fluorescent material and/or a nonfluorescent material disposed between the scintillator pixels, wherein when an average particle diameter of the fluorescent material I is Ds, and an average particle diameter of the fluorescent material and/or the nonfluorescent material is Dw, Ds>Dw is satisfied.

The improvement of the resolution by suppressing the transmitted light between pixels by the X-ray detector of the present invention is attained by the refraction or reflection caused at the interface between the pixel and the partition because the partition contains the fluorescent material and/or the nonfluorescent material having optical characteristics different from those of the fluorescent material I configuring the pixels. Here, the different optical characteristics indicate specifically that an average particle diameter is different, so that the optical characteristics are different. But, it also means that the optical characteristics are different because both the fluorescent materials have different refractive index and spectral absorption characteristic in addition to the different average particle diameters.

According to another aspect of the present invention, there is provided an X-ray detector comprising a photoelectric converting section of a pixel unit, scintillator pixels containing a fluorescent material I formed on individual pixels of the photoelectric converting section, and a partition containing a fluorescent material and/or a nonfluorescent material disposed between the scintillator pixels, wherein when a thickness of the scintillator pixels is Ts, an average particle diameter of the fluorescent material I in the scintillator pixels is Ds, and a volume packing density of the fluorescent material I within the scintillator pixels is Fs, Ds≥Ts•Fs/10 is satisfied. For example, when a volume filling factor is 50%, (Ds) is 0.5.

According to still another aspect of the present invention, there is provided an X-ray detector comprising a photoelectric converting section of a pixel unit, scintillator pixels containing a fluorescent material I formed on individual pixels of the photoelectric converting section, and a partition containing a fluorescent material and/or a nonfluorescent material disposed between the scintillator pixels, wherein when a thickness of the partition is Tw, an average particle diameter of the fluorescent material and/or the nonfluorescent material within the partition is Dw, and a volume packing density of the fluorescent material and/or the nonfluorescent material within the partition is Fw, Dw≤Tw•Fw/10 is satisfied.

Thus, by controlling the relationship between the particles of the fluorescent material in the partition and the thickness of the scintillator pixels and the thickness of the partition, degradation in luminance can be suppressed and an optical pixel-separating effect of the scintillator film can be exerted better by virtue of the following action and effect described below.

Fluorescence emission from the fluorescent material within the scintillation layer is scattered by the interface refraction between the phosphor particles and the peripheral binder or air and partly reaches a photoelectric converting element such as a photodiode. To guide fluorescent light efficiently to the photoelectric converting element, it is desirable that a ratio of the interface between the phosphor particles occupying the same volume and the surrounding binder is as small as possible. Meanwhile, it is necessary to enhance a total reflectance of the partition as high as possible to the fluorescent light from the scintillation layer. In this case, the particles (fluorescent material and/or nonfluorescent material) as a material contained in the partition are desired to have an average particle diameter as small as possible. In other words, as a ratio of the interface between the particles within the partition and the peripheral binder is larger, the partition exerts the effect of the reflecting diffuser by complex and multiple times of refractions, and effective reflectance increases.

In view of the relationships of the average particle diameters of the particles configuring the individual layers, it is considered that an optical separating effect between the adjacent pixels can be enhanced while securing the luminance of the scintillator pixels as an average particle diameter Ds of the fluorescent material forming the scintillation layer is larger than an average particle diameter of the particles forming the partition (Ds>Dw) and its ratio is larger.

Assuming a self-absorption coefficient of the fluorescent material at a self-absorption coefficient level of a general fluorescent material, the thickness of the layer containing the particles as T, the packing density of the particles as F, and the diameter of the particles as D, it was found from the result of a simulation of the relationship between the effective reflectance of the layer and T•F/D using an optical model that when the value of T•F/D is about 10 or more, the effective reflectance becomes a high level of 90% or more. Conversely, when the value of T•F/D is about 10 or less, it is highly possible that about 10% or more of fluorescent light passes through the layer to reach the opposite side. In view of the above relationship, for the scintillation layer formed of the fluorescent material, it is particularly effective to increase the particle diameter of the fluorescent material so to satisfy Ts•Fs/Ds≤10 (namely, Ds≥Ts•Fs/10) in order to guide the fluorescent light emitted from the top of the film to the photoelectric converting section. For the partition, when Tw•Fw/Dw≥10 (namely, Dw≤Tw•Fw/10), the effect of preventing the resolution from degrading by suppressing a possibility that the light emitted from the scintillator reaches the adjacent scintillator pixel through the partition is high.

As described above in connection with the particle diameter of the fluorescent material contained in the scintillator pixels, it is desired to increase the particle diameter of the fluorescent material I of the scintillation layer as large as possible in order to facilitate the reach of the fluorescent light emitted from the fluorescent material, the fluorescent light returned by reflecting from the partition layer, or when the powder of the partition layer is the fluorescent material in some cases, its fluorescent light to the photoelectric converting section such as a photodiode. It is to produce effects of decreasing the frequency of scattering of the fluorescent light by the interface between the fluorescent material I and a binder material or air as small as possible and minimizing an effective optical path length of the fluorescent light to reach the photoelectric converting section such as a photodiode. Besides, the fluorescent material I may be determined not to contain a binder such as a sintered body, so that a frequency of scattering due to the interface refraction between the fluorescent material and the binder or the like can be suppressed to a minimum. And, the self-absorption coefficients of the individual fluorescent materials and the absorption coefficient of the binder material or the like to the fluorescent light are decreased to a minimum, so that the fluorescent light emitted from the fluorescent material I or the fluorescent light entered from the fluorescent material of the partition section into the scintillation layer can be made to reach the photoelectric converting section such as the photodiode more easily.

Meanwhile, the particle diameter of the fluorescent material and/or the nonfluorescent material contained in the partition section is desired to be sufficiently small with respect to the thickness of the partition in order to assure good resolution characteristics. This is to prevent the fluorescent light which is emitted from the fluorescent material I of the scintillator pixels from being scattered many times and reaching the adjacent pixel, namely to provide an effect that the partition section becomes closer to the reflecting diffuser.

The effect of preventing the fluorescent light from the scintillator pixels from reaching the adjacent pixel relates to a degree of effective absorption or reflection of the fluorescent light by the partition layer. When the fluorescent light absorption coefficient is increased, substantial luminance drops, but the improvement of the reflectance does not degrade the luminance. The effective reflectance of the partition layer can be improved by decreasing the particle diameter (the maximum diameter of the minor axis when acicular powder is used) of the fluorescent material particles and increasing a frequency of the interface refraction between the fluorescent material and the peripheral material such as a binder. When the particle diameter is decreased, a state becomes close to a perfect reflecting diffuser, and total reflectance on the partition increases.

But, when the particle diameter of the fluorescent material and/or the nonfluorescent material becomes extremely small to come closer to about a fluorescent wavelength, the scattering effect lowers, so that the lower limit of the particle diameter is desirably set to about the fluorescent wavelength of the scintillation layer. The fluorescent light entered from the fluorescent material II into the scintillation layer is absorbed by the fluorescent material I contribute to an increase of the emission luminance and also mainly passes through the scintillation layer to reach the photodiode to improve the effective sensitivity of the X-ray detector.

According to still another aspect of the present invention, there is provided the X-ray detector according to any of claims 1 to 4, wherein the partition contains a fluorescent material II which has the longest wavelength of fluorescent light equal to or longer than the shortest wavelength of fluorescent light of the fluorescent material I.

A conventionally known X-ray detector having a partition structure has the partition formed of, for example, a metal material, a glass-based or ceramics material or a resin material, the partition itself does not emit light by X-ray irradiation, and it does not have an effect of increasing the light emission of the scintillation layer. But, the X-ray detector of the present invention has the partition structure which prevents the fluorescent light emitted from the scintillation layer from diffusing or spreading to reach the photoelectric converting element of the adjacent pixel, and the same partition structure contributes to the improvement of the resolution by suppressing the transmitted light between the pixels and the increase in the emission luminance of the scintillation layer.

Specifically, when the fluorescent light emitted from the fluorescent material II reaches the fluorescent material I, it does not contribute to the emission of the fluorescent light but excites to some higher energy levels the electrons present at some lower energy levels of electron transitions related to the generation of fluorescent light of at least the shortest wavelength related to the fluorescence excitation. As a result, a free-space ratio for electrons of a ground level required for the fluorescence emission transition of the fluorescent material I increases. Otherwise, the electron transition to which an impurity level or a defect level between bands is relevant is excited. As a result, when the fluorescent light from the fluorescent material I passes through the scintillation layer, a probability of exciting the electrons of the ground level or a possibility of electronic excitation to which the level between the bands is relevant is decreased to suppress the absorption of the fluorescent light from the fluorescent material I within the scintillation layer. Thus, an X-ray detector with higher luminance as compared with the X-ray detector of a conventional indirect conversion system having a partition formed of a metal material or the like can be obtained.

According to still another aspect of the present invention, there is provided the X-ray detector according to claims 1 to 4, wherein the partition contains a fluorescent material III which has optical characteristics different from those of the fluorescent material I contained in the scintillator pixels and has the shortest wavelength of fluorescent light equal to or shorter than the longest fluorescence excitation wavelength of the fluorescent material I.

Specifically, according to this aspect, the shortest wavelength of fluorescent light of the fluorescent material III contained in the partition is shorter than the longest excitation wavelength of fluorescent light of the fluorescent material I contained in the scintillation layer. Therefore, the fluorescent light emitted from the fluorescent material III reaches the fluorescent material I and increases the electron transition from the ground level related to at least the longest excitation wavelength of fluorescent light to the excitation level. As a result, the emission intensity itself of the fluorescent material I is increased.

As the fluorescent material I, a fluorescent material having Gd₂O₂S or CsI as a base material is suitable.

As the fluorescent material II or III, a fluorescent material having Gd₂O₂S as a base material is suitable, and the fluorescent material III is particularly desirable to have its longest wavelength of fluorescent light in an ultraviolet region.

For example, the X-ray detector of the present invention can be produced by the following methods described below.

A first method forms a scintillation layer first. A layer of the partition material containing the fluorescent material II and/or III and/or the nonfluorescent material is formed. Then, a portion where the scintillator pixel is formed is removed by a chemical reaction, a photochemical reaction, mechanically or thermally, and the removed portion is filled with the fluorescent material I.

Specifically, the first method of producing the X-ray detector of the present invention is a method for producing the X-ray detector comprised of forming scintillator pixels on a photoelectric converting section of a pixel unit and forming a partition between the scintillator pixels, the method comprising forming a layer containing a fluorescent material I on the photoelectric converting section of the pixel unit; forming the scintillator pixel by removing a portion, which is to be the partition, from the layer; and forming the partition by filling the portion removed in the step of forming the scintillator pixels with a material containing a fluorescent material II and/or a fluorescent material III and/or a nonfluorescent material.

A second method is reverse to the first method and forms the partition layer first.

Specifically, the second method for producing the X-ray detector of the present invention is a method for producing the X-ray detector, comprised of forming scintillator pixels on a photoelectric converting section of a pixel unit and forming a partition between the scintillator pixels, the method comprising forming a layer containing a fluorescent material II and/or a fluorescent material III and/or a nonfluorescent material on the photoelectric converting section of the pixel unit; forming the partition by removing a portion other than the portion, which becomes a pixel (the portion other than the portion to be the partition), from the layer; and forming the scintillator pixels by filling the portion removed in the partition forming step with a material containing the fluorescent material I.

A third method uses a temporary partition formed of an organic material such as a resin material or an inorganic material such as a metal material, and is particularly effective when it is hard to fabricate a layer containing a fluorescent material into a pixel shape or a partition shape.

Specifically, the third method for producing the X-ray detector of the present invention is a method for producing an X-ray detector, comprised of forming scintillator pixels on a photoelectric converting section of a pixel unit and forming a partition between the scintillator pixels, the method comprising forming a layer of an organic material such as a resin material or an inorganic material such as a metal material on the photoelectric converting section of the pixel unit, forming a temporary pixel of the resin material or the metal material by removing the portion, which becomes the partition, from the layer, forming the partition by filling the portion removed in the temporary pixel forming step with a material containing the fluorescent material II and/or the fluorescent material III and/or the nonfluorescent material, removing the temporary pixel, and forming the scintillator pixel by filling the portion where the temporary pixel is removed with a material containing the fluorescent material I.

A fourth method uses a temporary pixel formed of an organic material such as a resin material or an inorganic material such as a metal material and is particularly effective when it is hard to fabricate a layer containing the fluorescent material into a pixel shape or a partition shape.

Specifically, the fourth method for producing the X-ray detector of the present invention is a method for producing an X-ray detector, comprised of forming scintillator pixels on a photoelectric converting section of a pixel unit, and forming a partition between the scintillator pixels, the method comprising forming a layer of an organic material such as a resin material or an inorganic material such as a metal material on the photoelectric converting section of the pixel unit, forming a temporary partition of the resin material or the metal material by removing a portion other than the portion, which becomes the partition, from the layer, forming the scintillator pixels by filling the portion removed in the temporary partition forming step with a material containing the fluorescent material I, removing the temporary partition, and forming the partition by filling the portion where the temporary partition is removed with a material containing a fluorescent material II and/or a fluorescent material III and/or a nonfluorescent material. Generally, the pixel is a square having each side of 30 to 400 µm or a rectangle close to a square, the partition has a width of about 10 to 50 µm, and the scintillator pixel has a thickness of 100 to 800 µm. Necessary thickness is variable depending on the usage and the energy of X-rays to be detected but preferably 200 to 500 µm for general radiography for medical application and fluoroscopy.

As a method of partly removing the partition layer, the layer containing the fluorescent material such as a scintillation layer or the layer formed of the resin material or the metal material, there can be used known methods such as removal using a photochemical reaction by a laser beam having an emission wavelength of an ultraviolet region, removal by a chemical treatment, cutting removal by dicing and other mechanical means, and thermal removal by high-density heating by infrared laser or the like.

The fluorescent material has high hardness and binding energy, so that it is hard to remove by any of a chemical reaction, machining or a thermal or photochemical removal, but a method of forming a temporary partition or a temporary pixel by forming a pattern using the resin material or the metal material has an advantage that the fluorescent material removing step can be omitted. Additionally, degradation in luminous efficiency due to damage to a phosphor when fabricating or degradation in luminance due to coloring can be avoided. In these years, a special photoresist material which can be used to form a structure having a thickness of several hundreds µm and an aspect ratio of 10 or more with precision of several µm is also available on the market.

The conventional X-ray detector has the partition formed of, for example, a metal material, a glass-based or ceramics material or a resin material, the partition itself does not emit light by X-ray irradiation, and it does not have an effect of increasing the light emission of the scintillation layer. Meanwhile, the X-ray detector of the present invention has the partition layer which suppresses the fluorescent light emitted from the scintillation layer from spreading to reach the photoelectric converting element of the adjacent pixel and also to contribute to the increase in the emission luminance of the scintillation layer. The light-shielding effect of the partition in the X-ray detector of the present invention is obtained by interface refraction between the fluorescent material itself and the binder material or the total reflection on the interface by having the fluorescent material II or III or the nonfluorescent material in the partition in the form of powder having an appropriate particle diameter as described above. For example, it can be realized by containing a reflective material such as metal powder of Ag or Ag-based alloy, fine transparent ceramics powder of TiO₂ or the like or a resin material such as a pigment for absorbing fluorescent light into the nonfluorescent material configuring the partition.

### BRIEF DESCRIPTION OF THE DRAWINGS

Fig. 1 is a schematic circuitry diagram for illustrating an embodiment of the present invention.
Fig. 2 is a schematic sectional diagram showing a single pixel unit portion excerpted in order to illustrate an embodiment of the present invention.
Figs. 3A, 3B are characteristic diagrams for illustrating an embodiment of the present invention.
Figs. 4A, 4B are other characteristic diagrams for illustrating an embodiment of the present invention.
Fig. 5 is still another characteristic diagram for illustrating an embodiment of the present invention.

### BEST MODE FOR CARRYING OUT THE INVENTION

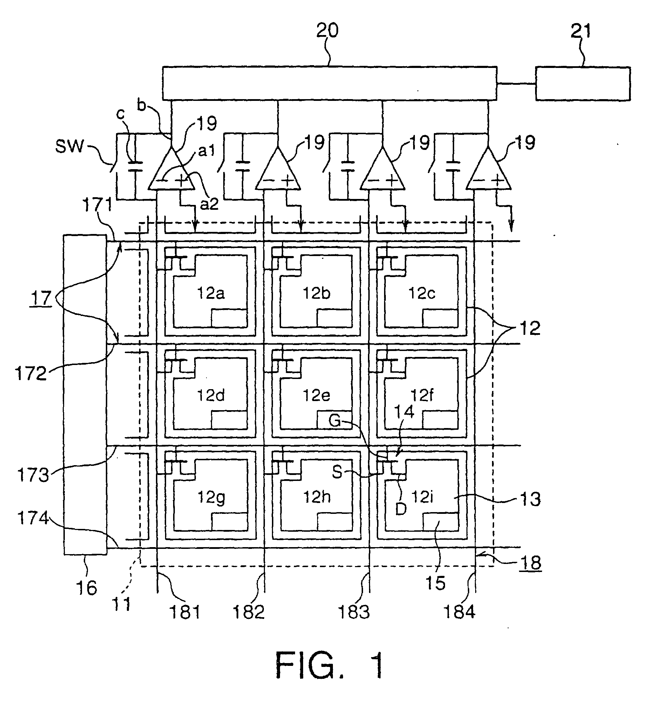

An embodiment of the present invention will be described with reference to the circuitry diagram of Fig. 1.

Reference numeral 11 is an X-ray photoelectric converting section, and the X-ray photoelectric converting section 11 is comprised of plural pixel units 12 arranged in matrix. For example, the plural pixel units 12 having the same configuration are two-dimensionally arranged on an insulation substrate such as glass in a row direction (e.g., a horizontal direction on the drawing) and a column direction (e.g., a vertical direction on the drawing). Fig. 1 shows nine pixel units 12a to 12i as an example.

One pixel unit, e.g., the pixel unit 12i, is comprised of a photodiode 13 for converting light into electric charge, a thin-film transistor (hereinafter referred to as TFT) 14 configuring a switching section, and an electric charge storage section for storing electric charge, such as a storage capacitor 15. The TFT 14 has a gate electrode G, a source electrode S and a drain electrode D. For example, the drain electrode D is electrically connected to the photodiode 13 and the storage capacitor 15.

A control circuit 16 for controlling an operating state, e.g., on/off, of the TFT 14 is disposed outside of the X-ray photoelectric converting section 11. The control circuit 16 is provided with plural control lines 17. In the drawing, first to fourth control lines 171 to 174 are disposed. The respective control lines 17 are connected to the gate electrode G of the TFT 14 configuring the pixel unit 12 of the same column. For example, the first control line 171 is connected to the gate electrodes G of the pixel units 12a to 12c.

Plural data lines 18 are disposed in a column direction. In the drawing, first to fourth data lines 181 to 184 are disposed. The respective data lines 18 are connected to the source electrodes S of the TFTs 14 configuring the pixel units 12 of the same column. For example, the first data. line 181 is connected to the source electrodes S of the pixel units 12a, 12d, 12g. The respective data lines 17 are connected to corresponding electric charge amplifiers 19.

For example, the electric charge amplifier 19 is configured of an operational amplifier, its input terminal a1 is connected to the data line 18, and its other input terminal a2 is grounded. A capacitor C is connected between the input terminal a1 and an output terminal b to form a configuration having an integration function. A switch SW is connected in. parallel to the capacitor C. For example, the switch SW is closed to discharge electricity remaining in the capacitor C.

The respective electric charge amplifiers 19 are connected to a parallel/serial converter 20 which converts plural electric signals to be input in parallel into a serial signal and outputs it. The parallel/serial converter 20 is connected to an analog-digital converter 21 which converts an analog signal into a digital signal.

The control circuit 16, the electric charge amplifiers 19, the parallel/serial converter 20 and the analog-digital converter 21 are formed as, for example, an integral circuit, and the individual circuits, for example, between the control circuit 16 and the TFT 14, are connected by wire bonding.

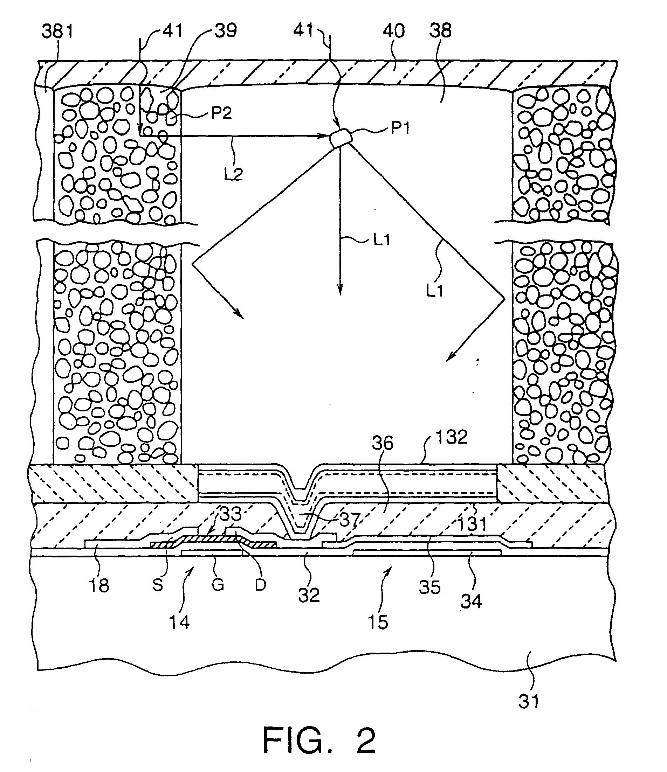

Then, a configuration of the X-ray photoelectric converting section 11 will be described with reference to Fig. 2. Fig. 2 is a sectional diagram showing a single pixel unit portion excerpted in part, wherein same numerals are used to denote same parts in Fig. 1, and a repeated description of those portions is partially omitted.

The TFT 14 and the storage capacitor 15 are formed on an insulation substrate 31 of glass or the like. The TFT 14 is comprised of the gate electrode G formed on the insulation substrate 31, an insulation film 32 covering the gate electrode G, a semiconductor film 33 formed on the insulation film 32, the source electrode S formed on the semiconductor film 33, and the drain electrode D.

The gate electrode G of the TFT 14 is connected to the control line 17 (Fig. 1), and the source electrode S is connected to the data line 18.

The storage capacitor 15 is comprised of a lower electrode 34 formed on the insulation substrate 31, the insulation film 32 extending from the gate electrode G to the lower electrode 34, and an upper electrode 35 disposed on the insulation film 32. The upper electrode 35 is electrically connected to the drain electrode D.

An insulation layer 36 is disposed above the TFT 14 and the storage capacitor 15, and the photodiode 13 is formed on the insulation layer 36. The photodiode 13 is formed of an a-Si pn diode or PIN diode. In the drawing, it is formed of the PIN diode. A first electrode 131 and a second electrode 132 are respectively formed on the bottom and top of the photodiode 13 shown in the drawing, and a bias voltage is applied between the first electrode 131 and the second electrode 132. The second electrode 132 is formed of an ITO transparent conductive film formed by a sputtering method or the like. A through hole 37 is formed in a part of the insulation layer 36, and the first electrode 131 of the photodiode 13 is electrically connected to the drain electrode D of the TFT 14 via the through hole 37. A scintillation layer 38 for converting X-rays into light is formed on the second electrode 132.

A partition layer 39 is formed in the peripheral region surrounding the scintillation layer 38, e.g., the boundary with a scintillation layer 381 of an adjacent pixel unit, and the scintillation layers of the adjacent pixel units are shielded by the partition layer 39. The scintillation layer 38 and the partition layer 39 each include a fluorescent material I (P1) and a fluorescent material II (P2), and the fluorescent material I (P1) and the fluorescent material II (P2) have a difference in an average particle diameter or an average particle diameter and other optical characteristics, e.g., one or plural characteristics of emission spectrum, refractive index, reflectance, and the like. And, a fluorescent light reflecting layer 40 for reflecting light is formed on the scintillation layer 38 and the partition layer 39, for example, to commonly cover the entire surface of the X-ray photoelectric converting section 11.

In the above-described structure, X-rays 41 enter the scintillation layer 38 and the partition layer 39 through the fluorescent light reflecting layer 40 and are converted into light by the scintillation layer 38 and the partition 39. Light L1 produced by the scintillation layer 38 is enhanced or suppressed its attenuation by the action of light L2 input from the partition layer 39 or reflected from the boundary with the partition layer 39, input from the scintillation layer 38 to the photodiode 13, and converted into electric charge. This electric charge is accumulated in the storage capacitor 15.

Reading of the electric charge accumulated in the storage capacitor 15 is controlled by the control circuit 16 and, for example, sequentially controlled for the individual rows (horizontal direction of Fig. 1) of the pixel units 12. First, an on signal of for example 10V is applied from the control circuit 16 to the gate electrodes G of the pixel units 12a to 12c located in the first row through the first gate line 171 to turn on the TFTs 14 of the pixel units of the first row.

At this time, the electric charge accumulated in the storage capacitors 15 of the pixel units 12a to 12c of the first row is output as an electric signal from the drain electrodes D to the source electrodes S. The electric signal output to the source electrodes S is amplified by the plural electric charge amplifiers 19. The amplified electric signal is added in parallel to the parallel/serial converter 20 and converted into a serial signal. Then, it is converted into a digital signal by the analog-digital converter 21 and sent to a next stage signal processing circuit (not shown).

After the electric charge is read from the storage capacitors 15 of the pixel units of the first row, an off signal of for example -5V is applied from the control circuit 16 to the gate electrodes G of the pixel units of the first row through the first gate line 171 to turn off the TFTs 14 of the pixel units of the first row.

The above-described procedure is also performed on the pixel units 12 of the second row and later. The electric charge accumulated in the storage capacitors 15 of all the pixel units 12 is read, sequentially converted into a digital signal and output. And, an electric signal corresponding to a single X-ray screen is output from the analog-to-digital converter 20.

In Fig. 1, the photodiode 13 is formed in an area which does not overlap the TFT 14 or the storage capacitor 15. But, in order to secure a large light-receiving area, the insulation layer is disposed on, for example, the TFT 14 and the storage capacitor 15, and the photodiode 13 can be formed on a larger area within a single pixel.

And, when it is assumed that an average particle diameter of the particles forming the partition 39 is Dw and a packing density of the particles in the partition 39 is Fw, they are formed to have a relationship of Tw•Fw/10≥Dw. And, when it is assumed that an average particle diameter of the fluorescent material in the scintillation layer 38 is Ds, a thickness of the scintillation layer 38 is Ts, and a packing density of the phosphor particles in the scintillation layer 38 is Fs, they are formed to have a relationship of Ts•Fs/10≤Ds. When it is assumed that an average particle diameter of the fluorescent material powder forming the scintillation layer 38 is Ds, and an average particle diameter of the material forming the partition 39 is D, they are formed to have a relationship of Ds>Dw.

In the above-described structure, X-rays 41 enter the scintillation layer 38 from outside and is converted into fluorescent light. Portion A1 of fluorescent light travels through the scintillation layer 38 to enter the photodiode 13. Portion A2 of the fluorescent light enters the partition 39 and its portion A21 returns to the scintillation layer 38 and enters the photodiode 13. And, portion A22 of the fluorescent light having entered the partition 39 travels through the partition 38. Portion A3 of the fluorescent light reflects from the partition 39 and travels through the scintillation layer 38.

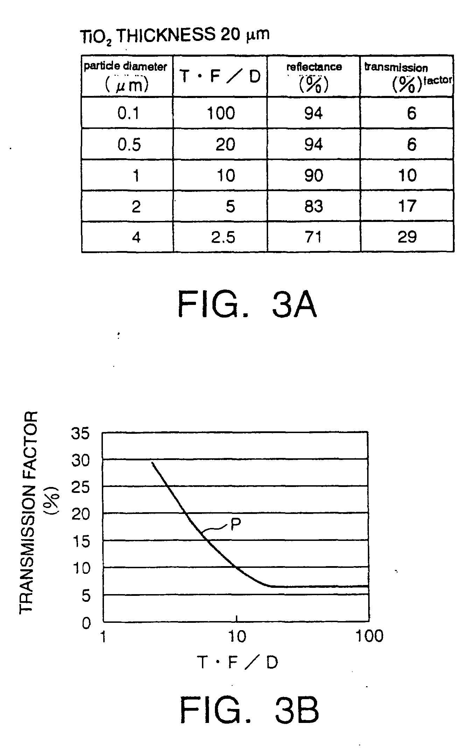

Assuming that a thickness of the layer formed of the particles is T, a packing density of the particles is F, and a particle diameter is D, a relationship between a value of (T•F/D) and effective transmission factor of the layer to the fluorescent light was simulated using an optical model, and the obtained result will be described with reference to Figs. 3A, 3B. Fig. 3A is a diagram showing a relationship among a particle diameter (µm), (T-F/D), reflectance (%) and transmission factor (%) when a TiO₂ layer is formed to have a thickness of 20 µm, and Fig. 3B is a graph showing a relationship between (T•F/D) and a transmission factor (%). In Fig. 3B, the horizontal axis indicates a value of (T·F/D), the vertical axis indicates a transmission factor (%), and the simulated results are indicated by a curve P.

It is apparent from Fig. 3A and Fig. 3B that when the value of (T·F/D) becomes about 10 or more, the effective transmission factor becomes 10% or less, and the fluorescent light is mostly reflected. Conversely, when the value of (T·F/D) becomes about 10 or less, the effective transmission factor becomes high, and fluorescent light of about 10% or more transmits. In the above embodiments, the partition 39 has a relation of Tw•Fw/10≥Dw, namely Tw•Fw/Dw≥10. Therefore, fluorescent light emitted from the scintillation layer 38 is reflected by the partition 39 at a high reflectance of 90% or more. In this case, an amount of fluorescent light entering into the partition 39 decreases, and a light-guiding effect is not produced in the partition 39. As a result, a loss of fluorescent light is decreased, and luminance of each scintillator pixel is improved. The fluorescent light which has entered from the scintillation layer 38 into the partition 39 does not pass through. Therefore, the fluorescent light which reaches the scintillation layer and photodiode of the adjacent pixel through the partition 39 decreases, and the resolution is prevented from degrading.

In the above embodiment, the scintillation layer 38 is determined to have a relationship of Ts•Fs/10≤Ds, namely Ts•Fs/Ds≤10, and the fluorescent material has a large particle diameter. In this case, the effective transmission factor in the scintillation layer 38 becomes high. For example, fluorescent light emitted on the top of the scintillation layer 38 is transmitted through the photoelectric converting section at a ratio of 10% or more.

And, the fluorescent light produced in the scintillation layer 38 is scattered complexly by refraction on the interface between the fluorescent material particles and a binder around the particles so as to reach a photoelectric converting element, e.g., the photodiode 13. Therefore, to guide efficiently the fluorescent light to the emitting element, a ratio of the interface between the phosphor particles and the binder in the same volume is desired to be small.

Meanwhile, it is necessary to increase the total reflectance of the partition 39 for the fluorescent light entering from the scintillation layer 38, and the particles forming the partition 39 are desired to have a small average particle diameter. If the average particle diameter is small, the ratio of the interface between the particles and the binder increases, and complex and multiple times of refraction is produced. As a result, the effect of the reflecting diffuser becomes high, and effective reflectance by the partition 39 is increased.

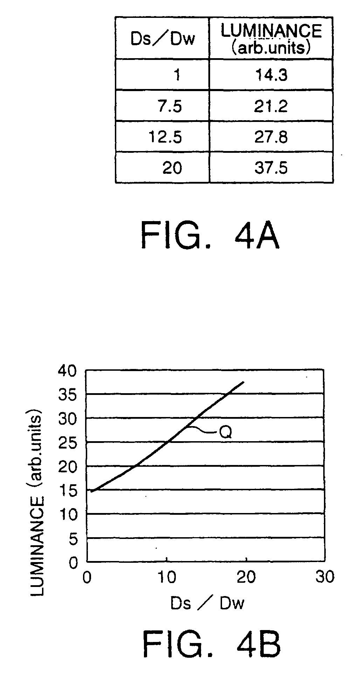

Here, the relationship between the value of (Ds/Dw) and the luminance characteristic of the pixel unit will be described with reference to Figs. 4A, 4B. Fig. 4A is a diagram showing a relationship between (Ds/Dw) and luminance (arb·units), and Fig. 4B is a diagram showing the relationship as a graph Q. In Fig. 4B, the horizontal axis is the value of (Ds/Dw), and the vertical axis is luminance.

In this case, the scintillation layer was formed by coating a coating fluid, which has fluorescent material powder (Gd₂O₂S:Tb) dispersed into the epoxy resin, on a photoelectric converting section to a thickness of 300 µm, and drying to cure the layer by heating to 80°C. Then, the scintillation layer was fabricated by a dicing method to form grid grooves having intervals of 150 µm, a depth of 280 µm and a width of 23 µm. The same fluorescent material powder having a particle diameter of 2 µm as the fluorescent material powder of the scintillation layer was filled in the grooves to form the partition.

As shown in Fig. 4A and Fig. 4B, when Ds/Dw=1, luminance is 14.3. When Ds>Dw, e.g., Ds/Dw=15, luminance is improved to 30 two times larger than that.

In the above embodiment, the relationship between an average particle diameter Ds of the fluorescent material forming the scintillation layer 38 and an average particle diameter Dw of the particles forming the partition 39 is determined to be Ds>Dw. Therefore, fluorescent light of the scintillation layer 38 reaches efficiently the photoelectric converting element, and the luminance of each pixel of the scintillation layer 38 is prevented from being degraded. And, a reflection effect by the partition 39 is enhanced, and an optical separating effect between the adjacent pixels is improved. This separating effect is conspicuous as a difference between Ds and Dw is larger.

In the above embodiment, the scintillation layer is formed of fluorescent material particles. But, the same effect can be obtained by using a sintered body of the fluorescent material. For example, a cluster of the sintered body has an average particle diameter Dc of 80 to 100 µm, and a distance between the adjacent photoelectric converting elements, e.g., photodiodes, is generally 50 µm or less. Therefore, the width of the partition is about 50 µm at maximum, and it satisfies the condition of Dc>Dw. In this case, the luminance characteristic of each pixel is improved as a difference between Dc and Dw is larger.

Then, a luminance-improving effect according to selection of a fluorescent wavelength of the fluorescent material I (P1) contained in the scintillation layer 38 and the fluorescent material II (P2) contained in the partition layer 39 will be described.

For the fluorescent material I, for example, Gd₂O₂S:Tb which produces light having a fluorescent wavelength distributing in a prescribed range is used, and for the fluorescent material II, a fluorescent material producing light of a fluorescent wavelength having a wavelength component which is equal to or longer than the shortest wavelength in the fluorescent wavelength of the fluorescent material I is used. For example, when Gd₂O₂S:Eu (4 wt%) is used, it has a small average particle diameter of about 2 µm.

With the above combination, light L1 produced by the scintillation layer 38 is suppressed its attenuation to a small level in the scintillation layer 38 by an action of light L2 produced by the fluorescent material II of the partition layer 39 and input to the photodiode 13 to increase the luminance.

In the above construction, the longest wavelength of fluorescent light of the fluorescent material II contained in the partition is larger than the shortest wavelength in the fluorescent wavelength produced by the fluorescent material I contained in the scintillation layer. Therefore, when the fluorescent light L2 emitted from the fluorescent material II enters the scintillation layer 38, it does not contribute to the fluorescence excitation of the fluorescent material I but excites the electrons present in the ground level of the electron transition related to the fluorescence excitation to a higher impurity level or a higher energy level not related to the generation of fluorescent light. As a result, a free-space ratio for electrons of the ground level needed for the fluorescence emission transition of the fluorescent material I increases. Thus, X-ray fluorescence emission efficiency of the fluorescent material I increases. When the fluorescent light L2 excites the electron transition to which the impurity level or defect level between the bands of the fluorescent material I relates, a probability of absorption by the excitation of the electrons of the ground level or a probability of absorption by the electronic excitation to which the level between the bands relates is decreased at the time when the fluorescent light L1 from the fluorescent material I passes through the scintillation layer, and the self-absorption of the fluorescent light L1 from the fluorescent material I within the scintillation layer 38 is suppressed. As a result, the improvement of the luminance is expected.

The fluorescent light L2 emitted from the fluorescent material II, which did not provide a luminance-improving effect to the fluorescent material I, reflects several times within the scintillation layer and partly reaches a detector to contribute to improvement of the luminance of the scintillation layer.

In the above case, for the fluorescent material I, there is used a phosphor having a different additive such as Gd₂O₂S:Eu other than Gd₂O₂S:Tb, a phosphor for X-rays having a rare earth ceramics-based material such as Gd₂O₂S, La₂O₂S or Lu₂O₂S as a base material, an iodide-based phosphor for X-rays such as CsI:Tl or CsI:Na, or a phosphor for X-rays such as CaWO₄, LaOBr:Tm or LaOBr:Tb.

For the fluorescent material II, there is used a phosphor having a different additive such as Gd₂O₂S:Pr or Gd₂O₂S:Tb other than Gd₂O₂S:Eu, a phosphor for X-rays having a rare earth ceramics-based material such as Gd₂O₂S, La₂O₂S or Lu₂O₂S as a base material, or a sulfide-based phosphor such as ZnCdS:Ag.

To select the fluorescent material I and the fluorescent material II, it is desirable practically to use a fluorescent material having a main fluorescent wavelength equal to or longer than the main fluorescent wavelength of the fluorescent material I for the fluorescent material II considering for example the fluorescence emission spectra of them. For example, when Gd₂O₂S:Tb having a main fluorescent wavelength of about 540 nm is used for the fluorescent material I, Gd₂O₂S:Eu having a main fluorescent wavelength of about 640 nm is used for the fluorescent material II.

But, the main emission wavelength of the fluorescent material II is not necessarily longer than the main emission wavelength of the fluorescent material I, and the luminance-improving effect can be expected from the above-described mechanism if the emission spectrum of the fluorescent material II is at least partly longer than the shortest emission wavelength of the fluorescent material I. When the combination is opposite to the above example and, for example, Gd₂O₂S:Eu is used for the fluorescent material I and Gd₂O₂S:Tb is used for the fluorescent material II, the fluorescence spectrum of about 500 nm or more in the fluorescent light L2 of from about 380 nm to about 680 nm emitted by Gd₂O₂S:Tb of the fluorescent material II increases the fluorescence emission efficiency of Gd₂O₂S:Eu of the fluorescent material I having the shortest emission wavelength of about 500 nm.

When the fluorescent material II contained in the partition is the same type of phosphor as the fluorescent material I contained in the pixel section, the same effect can be expected for the same type of phosphor such as Gd₂O₂S:Tb, Gd₂O₂S:Eu, La₂O₂S or Lu₂O₂S for example.

According to another aspect of the invention when the partition is configured of a fluorescent material with another feature, the luminance of the scintillator pixel is also improved by the following configuration. Specifically, when the emission spectrum of the fluorescent material III contained in the partition layer contains a fluorescence excitation wavelength of the fluorescent material I contained in the scintillation layer 38, the fluorescent light L2 emitted from the fluorescent material III reaches the fluorescent material I and increases the electron transition from the ground level to the excitation level corresponding to at least the longest excitation wavelength of fluorescent light, resulting in increasing the emission intensity itself of the fluorescent material I. In this configuration, the inclusion into the partition of the fluorescent material III having a fluorescence emission spectrum of a wavelength equal to or shorter than the longest excitation wavelength of the fluorescent light of the fluorescent material I contained in the scintillation layer 38 is pertinent. In this configuration, the inclusion into the partition of the fluorescent material III having a fluorescence emission spectrum of a wavelength equal to or shorter than the longest excitation wavelength of the longest wavelength of fluorescent light of the fluorescent material I contained in the scintillation layer 38 is pertinent. Especially, when the main emission wavelength of the fluorescent material III is shorter than the main emission wavelength of the fluorescent material I, the luminance-improving effect becomes higher. As the fluorescent material I, for example, an phosphor based on Gd₂O₂S having a different additive other than Gd₂O₂S:Eu or Gd₂O₂S:Pr, and a phosphor for X-rays having a rare earth ceramics-based material as a base material such as La₂O₂S or Lu₂O₂S and containing an additive such as Eu or Tb, are desirable.

For the fluorescent material III, a phosphor having a different additive such as Gd₂O₂S:Eu other than Gd₂O₂S:Tb, a phosphor for X-rays having a rare earth ceramics-based material such as Gd₂O₂S, La₂O₂S or Lu₂O₂S as a base material, a sulfide-based phosphor such as ZnCdS:Ag, ZnS:Ag or ZnS:Cu, an iodide-based phosphor for X-rays such as CsI:Tl or CsI:Na, and a phosphor for X-rays such as CaWO₄, LaOBr:Tm or LaOBr:Tb are used.

When the fluorescent material I and the fluorescent material III are of the same phosphor type, there is an effect of improving the emission luminance of the fluorescent material III because the emission spectrum component of the fluorescent material III on the side of a wavelength shorter than those of the individual spectrum components of the emission spectrum of the fluorescent material I contributes to the fluorescence excitation of the fluorescent material I.

The fluorescent light L2 emitted from the fluorescent material III does not produce an effect of improving the luminance of the fluorescent material I, but it is reflected diffusely in the scintillation layer to partly reach the detector so to contribute to the improvement of the luminance of the scintillation layer in the same way as the first mechanism described above.

As the fluorescent material III which has a fluorescent wavelength for excitation of the fluorescent material I, an X-ray phosphor such as CaWO₄, LaOBr:Tb or BaSO₄:Eu is used other than ZnS:Ag.

In this case, an X-ray phosphor, which emits light having a wavelength component similar to or shorter than the fluorescence excitation wavelength of the fluorescent material I, is used to select the fluorescent material III considering the fluorescence excitation spectrum of the fluorescent material I and the fluorescence emission spectrum of the fluorescent material III.

For the fluorescent material I contained in the scintillation layer, a fluorescent material having high X-ray absorption coefficient and high conversion efficiency from X-rays to fluorescent light, small self-absorption of fluorescent light and high transparency is desirable. For example, a phosphor having Gd₂O₂S as a base material or a phosphor having CsI as a base material is effective. The phosphor having Gd₂O₂S as a base material is powder, of which particle diameter is controlled easily, stable against moisture and chemicals and suitable for production of the scintillation layer.

To select the fluorescent material I, it is desirable to consider not only the luminous efficiency of the phosphor to the used X-rays but also the consistency between the fluorescent wavelength and the spectral sensitivity characteristic of the photodiode. For example, when it is assumed that an a-Si photodiode having a peak of spectral sensitivity characteristic on the order of 600 nm is used as a detector, Gd₂O₂S:Eu (a main emission wavelength of 630 nm), which is inferior in luminous efficiency to Gd₂O₂S:Tb (a main emission wavelength of 545 nm), indicates a value equal to or slightly larger than that in terms of the detection output of the photodiode. Comprehensively, Gd₂O₂S:Eu, Gd₂O₂S:Tb, CsI:Tl and the like are desirable fluorescent materials.

As the fluorescent material II contained in the partition layer, for example, when the fluorescent material contained in the scintillation layer is determined to be Gd₂O₂S:Tb, its shortest wavelength of the fluorescent light is about 370 nm, and Gd₂O₂S:Tb, Gd₂O₂S:Pr, Gd₂O₂S:Eu, CsI:Tl, and the like which have the longest wavelength of the fluorescent light of 370 nm or more and satisfy the above conditions are effective.

For the fluorescent material III contained in the partition layer, for example, when the fluorescent material I contained in the scintillation layer is Gd₂O₂S:Eu (a main emission wavelength of 630 nm), its main emission wavelength component has an excitation wavelength of approximately 630 nm or below, so that an X-ray phosphor such as Gd₂O₂S:Tb, BaFCl:Eu, LaOBr:Tb, Y₂O₂S:Tb, ZnS:Ag or (Zn, Cd)S:Ag having a main fluorescence emission component at 630 nm or below is suitable.

For the fluorescent material III which excites the fluorescent material I, a fluorescent material having the longest wavelength of the fluorescent light in an ultraviolet region becomes effective. For example, when the scintillation layer becomes thick, light produced in the partition layer crosses the scintillation layer of the adjacent pixel to reach the scintillation layer over it and possibly degrades the resolution.

The fluorescent wavelength of the fluorescent material III contained in the partition layer is in the ultraviolet region, so that absorption in the scintillation layer is large as compared with fluorescent light with a wavelength longer than that of visible light, and a possibility that the ultraviolet fluorescent light reaches over the adjacent scintillator pixel is very low. Especially, when the film is thick, the resolution tends to become low because of the diffusion of the fluorescent light over the adjacent pixel, and effectiveness of the present invention is increased.

As the fluorescent material III contained in the partition layer, a mixture of the fluorescent material having a fluorescent wavelength component to excite the above-described fluorescent material I and the fluorescent material having the longest wavelength of the fluorescent light outside of the ultraviolet region can also be used. In this case, a luminance-improving effect is realized by the individual mechanisms depending on their mixing ratio.

By configuring as described above, light produced by the fluorescent material II or III contained in the partition layer suppresses the attenuation of light produced by the fluorescent material I in the scintillation layer or enhances light produced by the fluorescent material I. At this time, the light produced by the fluorescent material II or III partly passes through the scintillation layer to reach the photodiode so as to contribute to the improvement of the sensitivity.

To improve the sensitivity improving effect, the fluorescent material I of the scintillation layer desirably has a large particle diameter. For example, the effect is enhanced by having a particle diameter larger than that of the partition layer or having an integrally sintered structure to suppress scattering by refraction on the interface between the fluorescent material and a peripheral material such as a binder to a minimum level. It is also desired that a self-absorption coefficient of each fluorescent material and an absorption coefficient of the binder material to the individual fluorescent light are small.

The above-described structure has an outstanding pixel-separating effect and improves so-called resolution by decreasing the particle diameter of the fluorescent material in the partition layer.

For example, when the particle diameter (an acicular diameter when the fluorescent material is acicular powder) of the fluorescent material is decreased, a frequency of refraction on the interface between the fluorescent material and the peripheral material such as a binder increases. When the particle diameter is small, a state becomes close to a perfect reflecting diffuser, and reflectance increases. As a result, light produced by the scintillation layer is prevented from reaching the scintillation layer of the adjacent pixel unit, and the pixel-separating effect increases.

In this case, an effective reflection effect is realized by arranging for example at least about four particles of the fluorescent material in a wall-width direction of the partition layer held between the scintillation layers. At this time, when the fluorescent material II or III contained in the partition layer has its average particle diameter indicated by φ and a volume filling factor by D, a sufficiently effective reflection effect can be obtained by determining that a value (φ/D) obtained by division of the average particle diameter φ by the volume filling factor D is 1/2 or below of the width of the partition layer. When the particle diameter of the fluorescent material becomes extremely small and its particle diameter becomes close to a fluorescent wavelength produced in the scintillation layer, the scattering effect becomes low. Therefore, the lower limit of the particle diameter becomes proximate to the shortest wavelength of the fluorescent light produced by the fluorescent material I of the scintillation layer.

Then, a method for producing the above-configured X-ray detector will be described.

First, a photoelectric converting section of, e.g., the TFT 14, the storage capacitor 15, the photodiode 13 and the like, is formed as a pixel unit on the insulation substrate 31.

Then, a mixture material of the fluorescent material I such as Gd₂O₂S:Tb and a resin material such as epoxy configuring the scintillation layer 38 is applied in a thickness of 400 µm on, for example, plural photodiodes 13, which are formed into matrix, to form a scintillator film, which is then solidified by sintering.

Then, the scintillator film is fabricated by dicing or the like to form grooves in a portion where the partition layer 39 is formed. At this time, the grooves having a width of 25 µm are formed at a pitch of 150 µm in accordance with the arrangement of the photodiode 13 and the TFT 14 to form the scintillation layer 38 separated into a pixel unit.

A slurry filling material prepared by dissolving a mixture material of the fluorescent material II or III, e.g., Gd₂O₂S:Eu having a small particle diameter with an average particle diameter of 2 µm or ZnS:Ag powder having an average particle diameter of 2 µm and PVB (polyvinyl butyral) into butyl acetate is filled in the grooves by a precipitation method or the like. After drying, the filling material remaining on the surface is removed by polishing or the like to form the partition layer 39.

A mixture material of fine powder of TiO₂ and a resin binder is applied onto the surface of plural scintillation layers 38 and partition layers 39, which are separately formed for individual pixels, to form the fluorescent light reflection film 40.

The fluorescent light reflection film 40 can also be formed of fine powder of transparent ceramics or fine powder of a phosphor. It can also be formed of a metal film if good flatness can be obtained.

To prevent the scintillation layer 38 from being deteriorated by moisture or the like, a major section of the X-ray detector is vacuum-sealed by covering with an envelop of A1 or plastic, or the envelop is filled with dry gas.

The above-described production method first forms the scintillation layer 38 and then forms the partition layer 39. But, the scintillation layer 38 can be formed after the partition layer 39 is formed. For example, the partition film is formed of a material containing the fluorescent material II or III, the partition film of a portion forming the scintillation layer 38 is removed, and the removed portion is filled with a scintillator material containing the fluorescent material I.

Another method of forming the scintillation layer 38 and the partition layer 39 will be described. First, a preliminary film of a resin material or a metal material which is easily formable is formed on the top of a photodiode or the like. Then, the preliminary film of a portion to be the partition layer 39 (or the scintillation layer 38) is removed, and the removed portion is filled with a fluorescent material which forms the partition layer 39 (or the scintillation layer 38). The preliminary film pattern remaining without being removed in the previous step is selectively removed, and the portion where the preliminary film is selectively removed is filled with a fluorescent material which forms the scintillation layer 38 (or the partition layer 39).

The fluorescent material is an inorganic material and has high hardness and high binding energy. Therefore, a chemical reaction, machining, a thermal method and a photochemical method may have difficulty in patterning to partly remove the scintillator film or the partition film. In such a case, a method of forming the preliminary film of a resin material or a metal material is effective. It also has an advantage that degradation in luminous efficiency due to damage to the phosphor at the time of fabricating or degradation in luminance due to coloring is suppressed.

As a method of patterning by partly removing the scintillator film and the partition to form the grooves, a method of using photochemical decomposition by a laser of an ultraviolet region, a method of using thermolysis by a laser of an ultraviolet region, an etching method of chemically melting a binder material, and the like can also be used other than the dicing method.

In the above-described embodiment, the scintillation layer and the partition layer are sequentially formed on the plural photoelectric converting sections formed for each pixel unit. But, there can be used a method of forming the scintillation layer and the partition layer on a different substrate and bonding the scintillation layer and the partition layer onto the photoelectric converting section.

Here, the results obtained by measuring the characteristics of examples and comparative examples of the present invention are shown in Table 1.

The characteristics in Table 1 were measured by the following methods.

### <Relative sensitivity>

A reflecting layer was formed on a glass substrate by kneading fine TiO₂ powder into a resin and applied onto it, and individual scintillation layer and partition layer were formed in thickness of 300 µm t on it to obtain characteristic evaluation samples. A pitch between pixels on the film with the pixels separated in the form of a grid was 150 µm and a partition width was about 20 µm. Each sample was polished to have a flat surface and adhered closely to an a-Si (amorphous silicon) photodiode array having a spectral sensitivity characteristic of 600 to 700 nm with an optical gel between them. And, sensitivity output of the a-Si photodiode was averaged to use as an index for sensitivity evaluation.

### <MTF (resolution characteristics)>

Samples were produced in the same manner as those used for measuring the sensitivity characteristics, X-ray fluoroscopic images were measured via a lead plate chart having a slit line with a width of 50 µm or below formed, and a line spread function was measured from the expansion of the X-ray fluoroscopic image. The line spread function was subject to Fourier transform so to calculate MTF (Modulation Transfer Function) with respect to a spatial frequency.

### <Average particle diameter of fluorescent material>

Appropriate cross sections at several portions are observed through an SEM, and effective particle diameters are determined from the area of individual fluorescent material particles of the SEM images and averaged.

**[Table 1]**

| S A M P L E | Scintillation Layer | | Partition layer | | Characteristics | |
|---|---|---|---|---|---|---|
| | Fluorescent material | Average particle diameter | Fluorescent material | Average particle diameter | Relativity sensitivity | MTF (2Lp/mm) |
| 1 | Gd₂O₂S:Tb | 15 µm | Gd₂O₂S:Eu | 2 µm | 0.83 | 80% |
| 2 | Gd₂O₂S:Tb | 15 µm | Gd₂O₂S:Tb | 2 µm | 0.84 | 80% |
| 3 | Gd₂O₂S:Tb | 15 µm | CaWO₄ | 2 µm | 0.82 | 80% |
| 4 | Gd₂O₂S:Tb | 15 µm | YTaO₄ | 2 µm | 0.86 | 80% |
| *5 | Gd₂O₂S:Tb | 15 µm | TiO₂ | 2 µm | 0.75 | 80% |
| *6 | Gd₂O₂S:Tb | 15 µm | No pixel separation | --- | 1.00 | 30% |

| | | | | | | |
|---|---|---|---|---|---|---|
| (Note 1) YTaO4 is an ultraviolet emission phosphor (Note 2) * indicates comparative examples (the same applies below). | | | | | | |

In both examples and conventional examples, it was determined that a unit pixel had a pitch of 150 µm, a unit pixel size was 130 µm x 130 µm (partition width of 20 µm), and the phosphor of the scintillation layer and partition layer had a volume filling factor of 0.5 (50%). The photodiode was formed by a plasma CVD method and photolithography. The electrode film on the photodiode had ITO formed by sputtering. The photodiode has a PIN structure of a-Si, sensitivity in a wavelength range of about 380 to 720 nm, and a peak of sensitivity in the vicinity of 600 nm. The scintillation layer and the partition layer have a thickness of 300 µm.

Samples 1 to 4 in Table 1 have the configurations according to the present invention and have the fluorescent material contained in the partition layer. Sample 5 has a configuration having the partition layer not containing the fluorescent material, and sample 6 has a configuration free from the partition layer. The resolution characteristics were compared by the MTF (%) of a spatial frequency of 2 Lp/mm.

It is apparent from Table 1 that prior example sample E has significant degradation in luminance in comparison with the configuration of sample F not having the partition layer. Samples A to D of the present invention have the degradation in luminance remained at about 15%. Sample F does not have the partition layer and does not suffer from the degradation in luminance, but it is extremely poor in resolution characteristics and cannot be used for X-ray diagnosis that a high-definition image is required.

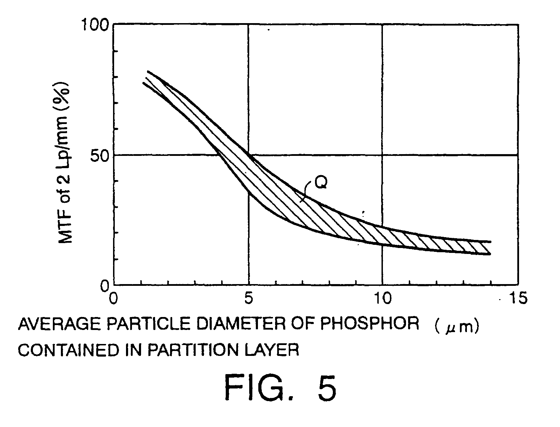

Code Q in Fig. 5 indicates a relationship between an average particle diameter (unit µm on the lateral axis) of the fluorescent material contained in the partition layer and the MTF (unit % on the vertical axis,) with resolution characteristics of 2 Lp/mm.

The values of MTF are variable in a certain range, so that the code Q is indicated with a prescribed range. It is seen from Fig. 4 that when the fluorescent material has an average particle diameter of approximately 5 µm or less which is 1/4 of the partition's width, the resolution characteristics are improved remarkably.

Then, samples having the thickness of the scintillation layer, the average particle diameter of the fluorescent material I, the wall thickness within the partition and the particle diameter of the fluorescent material II determined to fall and not to fall in the ranges given in claims 2 and 3 were prepared and measured for luminance and CTF (resolution). The results are shown in Table 2. The individual samples have a pixel-separating scintillator formed on a TFT substrate with a photodiode having a pitch of 150 µm under the following conditions. In the table, O denotes those conforming to the formulas given in claims, and X denotes those not conforming to the formulas given in claims.

In the table, the marks denote the following.
Ts: Thickness of scintillator pixel
Ds: Average particle diameter of fluorescent material I for scintillation layer
Fs: Packing density of fluorescent material I for scintillation layer
Tw: Thickness of partition
Dw: Average particle diameter of at least one of fluorescent material, fluorescent material III and nonfluorescent material in the partition
Fw: Packing density of at least one of fluorescent material II, fluorescent material III and nonfluorescent material in the partition
   Sample 7:
      Ds=6 µm, Ts=200 µm, Fs=70%, no pixel separation structure
   Sample 8:
      Ds=40 µm, Ts=500 µm, Fs=50%
      Dw=0.3 µm, Tw=20 µm, Fw=50%
   Sample 9:
      Ds=40 µm, Ts=500 µm, Fs=50%
      Dw=2 µm, Tw=20 µm, Fw=50%
   Sample 10:
      Ds=15 µm, Ts=500 µm, Fs=50%
      Dw=0.3 µm, Tw=20 µm, Fw=50%
   Sample 11:
      Ds=15 µm, Ts=500 µm, Fs=50%
      Dw=2 µm, Tw=20 µm, Fw=50%
   Sample 12:
      Ds=1 µm, Ts=20 µm, Fs=50%
      Dw=2 µm, Tw=40 µm, Fw=50%

Table 2 shows the characteristics of the individual samples.

**[Table 2]**

| Sample | Ds>Dw | Ds≥Ts·Fs/10 | Dw≤Tw·Fw/10 | Luminance (times) | CTF(%) |
|---|---|---|---|---|---|
| 7 | | | | 1 | 40 |
| 8 | O | O | O | 1.7 | 45 |
| 9 | O | O | X | 1.7 | 30 |
| 10 | O | X | O | 0.8 | 45 |
| 11 | O | X | X | 0.9 | 33 |
| 12 | X | O | O | 0.05 | 75 |

It is seen from the table that the samples satisfying the requirements of claims 1 to 3 have the best characteristics, and the characteristics are good in order of the samples satisfying the requirements of claims 1 and 2, the samples satisfying the requirements of claims 1 and 3, and the samples satisfying the requirement of claim 1 only. Samples 7 and 12 are comparative examples.

### INDUSTRIAL APPLICABILITY

The present invention can realize an X-ray detector having improved image characteristics and a method for producing it. The X-ray detector according to the present invention can also be applied for diagnosis of circulatory organs and digestive organs other than radiography of the chest of a human body. The X-ray detector according to the present invention can also be applied to an industrial X-ray detector. It can be applied to a detector for a two-dimensionally arranged plane and also to a detector for a one-dimensionally arranged line (X-ray line sensor). Thus, the X-ray detector according to the present invention has industrial applicability in wide fields.

## Claims

1. An X-ray detector comprising a photoelectric converting section of a pixel unit, scintillator pixels containing a fluorescent material I formed on individual pixels of the photoelectric converting section, and a partition containing a fluorescent material and/or a nonfluorescent material disposed between the scintillator pixels,
wherein, when an average particle diameter of the fluorescent material I is Ds, and an average particle diameter of the fluorescent material and/or the nonfluorescent material is Dw, Ds>Dw is satisfied.

2. The X-ray detector according to claim 1, wherein, when a thickness of the scintillator pixels is Ts, an average particle diameter of the fluorescent material I in the scintillator pixels is Ds, and a packing density of the fluorescent material I within the scintillator pixels is Fs, Ds≥Ts•Fs/10 is satisfied.

3. The X-ray detector according to claim 1 or 2, wherein, when a thickness of the partition is Tw, an average particle diameter of the fluorescent material and/or the nonfluorescent material within the partition is Dw, and a packing density of the fluorescent material and/or the nonfluorescent material within the partition is Fw, Dw≤Tw•Fw/10 is satisfied.

4. The X-ray detector according to claim 3, wherein the scintillator pixels containing the fluorescent material I are formed of a sintered body of the fluorescent material I.

5. The X-ray detector according to any of claims 1 to 4, wherein the partition contains a fluorescent material II which has optical characteristics different from those of the fluorescent material I contained in the scintillator pixels and the longest wavelength of fluorescent light equal to or longer than the shortest wavelength of fluorescent light of the fluorescent material I.

6. The X-ray detector according to any of claims 1 to 4, wherein the partition contains a fluorescent material III which has optical characteristics different from those of the fluorescent material I contained in the scintillator pixels and the shortest wavelength of fluorescent light equal to or shorter than the longest fluorescence excitation wavelength of the fluorescent material I.

7. The X-ray detector according to any of claims 1 to 6, wherein the fluorescent material I is a fluorescent material having Gd₂O₂S or CsI as a base material.

8. The X-ray detector according to any of claims 1 to 6, wherein the fluorescent material II or III is a fluorescent material having Gd₂O₂S as a base material.

9. The X-ray detector according to claim 6 or 8, wherein the longest wavelength of fluorescent light of the fluorescent material III is in an ultraviolet region.

10. A method for producing the X-ray detector according to any of claims 1 to 9, comprised of forming scintillator pixels on a photoelectric converting section of a pixel unit and forming a partition between the scintillator pixels, the method comprising:
forming a layer containing a fluorescent material I on the photoelectric converting section of the pixel unit;
forming the scintillator pixel by removing a portion, which is to be the partition, from the layer; and
forming the partition by filling a material containing a fluorescent material II and/or a fluorescent material III.

11. A method for producing the X-ray detector according to any of claims 1 to 9, comprised of forming scintillator pixels on a photoelectric converting section of a pixel unit and forming a partition between the scintillator pixels, the method comprising:
forming a layer containing a fluorescent material II and/or a fluorescent material III on the photoelectric converting section of the pixel unit;
forming the partition by removing a portion other than the portion, which becomes the partition, from the layer; and
forming the scintillator pixels by filling the portion removed in the partition forming step with a material containing the fluorescent material I.

12. A method for producing the X-ray detector according to any of claims 1 to 9, comprised of forming scintillator pixels on a photoelectric converting section of a pixel unit and forming a partition between the scintillator pixels, the method comprising:
forming a layer of an organic material such as a resin material or an inorganic material such as a metal material on the photoelectric converting section of the pixel unit;
forming a temporary pixel of the resin material or the metal material by removing a portion, which becomes the partition, from the layer;
forming the partition by filling the portion removed in the temporary pixel forming step with a material containing the fluorescent material II and/or the fluorescent material III;
removing the temporary pixel; and
forming the scintillator pixels by filling the portion where the temporary pixel is removed with a material containing the fluorescent material I.

13. A method for producing the X-ray detector according to any of claims 1 to 9, comprised of forming scintillator pixels on a photoelectric converting section of a pixel unit and forming a partition between the scintillator pixels, the method comprising:
forming a layer of an organic material such as a resin material or an inorganic material such as a metal material on the photoelectric converting section of the pixel unit;
forming a temporary partition of the resin material or the metal material by removing a portion other than the portion, which becomes the partition, from the layer;
forming the scintillator pixels by filling the portion removed in the temporary partition forming step with a material containing the fluorescent material I;
removing the temporary partition; and
forming the partition by filling the portion where the temporary partition is removed with a material containing a fluorescent material II and/or a fluorescent material III.
